# EUROPEAN PATENT SPECIFICATION

(11) **EP 1 599 912 B1**
(45) Date of publication and mention of the grant of the patent: **15.04.2015**
(21) Application number: 04716384.5
(22) Date of filing: 02.03.2004
(51) Int. Cl.: H01M 10/052, H01M 4/62, H01M 10/0525

(54) **BINDER WITH TWO OR MORE PHASES CONTROLLING THE CELL PROPERTIES, ADHESIVE PROPERTY AND COATING PROPERTY FOR LITHIUM SECONDARY BATTERY**
BINDER, MIT ZWEI ODER MEHR PHASEN, DER DIE ZELLENEIGENSCHAFTEN, HAFTEIGENSCHAFT UND BESCHICHTUNGSEIGENSCHAFT BESTIMMT FÜR EINE LITHIUM-SEKUNDÄRBATTERIE
LIANT À AU MOINS DEUX PHASES MODULANT LES PROPRIETES DE CELLULE, LE POUVOIR ADHESIF ET LES PROPRIETÉS DE COUVERTURE, POUR BATTERIE SECONDAIRE AU LITHIUM

(30) Priority: 05.03.2003 KR 2003013760
(43) Date of publication of application: 30.11.2005
(73) Proprietor: LG Chem, Ltd., Seoul 150-721 (KR)
(72) Inventor: KIM, Hae-Young, Namdong-gu, Incheon 405-240 (KR); RYU, Dong-Jo, Daejeon 302-777 (KR); KIM, Ju-Hyun, Daejeon 305-340 (KR); HAN, Chang-Sun, Yuseong-gu, Daejeon 305-340 (KR)
(74) Representative: Hinkelmann, Klaus
(86) International application number: PCT/KR2004/000442
(87) International publication number: WO 2004/079841

(56) References cited:
- WO-A1-01/18892
- JP-A- 11 025 989
- KR-A- 2000 075 953
- KR-A- 2001 022 722
- KR-A- 2001 099 909

## Description

### Technical Field

The present invention relates to a binder for a lithium secondary battery, preparation method thereof, a binder composition comprising the binder, a slurry using the binder composition, an electrode formed of the slurry, and a lithium secondary battery prepared by using the electrode.

### Background Art

Recently, developments for downsizing and weight reduction in portable computers, portable phones, camcorders, etc., are continuously progressed. In view of this, a secondary battery used as a power source of the above electronic devices has a need of capacity increase, downsizing, weight reduction and thin film technology. Particularly, a lithium secondary battery has advantages of a high voltage, a long life, a high energy density, etc., and thus, through active researches, has been produced and sold.

The properties of a lithium secondary battery depend on the electrode, the electrolyte and other battery materials used therein. Among these, the physical properties of the electrode are determined by the binder that provides bonding forces between active materials and collectors, and between active materials themselves. In particular, the higher the amount of the active material is, the higher the capacity of the cell product is, since the amount of the active material introduced to the electrode relates to the maximum value of lithium ions which can be bound ultimately. Therefore, if the binder has an excellent adhesive strength so as to reduce the amount of the binder introduced in the electrode, the electrode having increased amount of active materials can be produced. Accordingly, a binder having an excellent adhesive strength is very much in demand.

The most typical binder currently used is a PVDF (polyvinylidene fluoride) polymer, which is used in the form of a binder composition by mixing with an organic solvent such as NMP (N-methyl-2-pyrrolidone). However, the PVDF-based binder has a disadvantage in that it is introduced in a large amount in order to maintain a sufficient adhesive strength, and it causes an environmental problem related with the use of the organic solvent, NMP. Accordingly, an attempt for making a high-efficiency binder composition using water as a dispersion medium is disclosed (Japanese Patent Laid-Open Gazette No. Hei 5-21068, Hei 5-74461, etc.), and a binder having a structure formed of two phases different in view of chemical structure is suggested (Korea Patent Laid-Open Gazette No. 2000-0075953).

Furthermore, JP 11 025989 discloses a secondary battery electrode binder, which is composed of aromatic vinyl units, conjugate diene units, (meth)acrylic ester units and ethylenically unsaturated carboxylic units, whereby the binder preferably contains core-shell structured particles in which the cores are made of a (co)polymer with a glass transition point of -50 to 50°C and the shells are made of a (co)polymer with a glass transition point of 0 to 100°C.

Moreover, US 6,881,517 B1 discloses a binder for a lithium ion secondary battery which comprises a polymer containing structural units derived from 1,3-butadiene, whereby the polymer has a 1,2-vinyl structure content in the range of 2% to 25% per mole. This polymer may be either a single polymer or a combination of at least two polymers.

However, these binders of the prior arts cannot provide a sufficient adhesive strength between the active material and the collector, and thus have a problem in that the capacity is rapidly reduced by repetition of charge/discharge.

### Detailed Description of the Invention

By comparing the aforesaid binder preparation technologies according to the prior arts, we have found that, when a binder has a structure formed of two or more phases different in view of cell property, adhesive strength and coating property, the binder can provide a higher adhesive strength, an excellent cell property and a better coating property of slurry to be coated on the collector, wherein the binder can be prepared by polymerizing the detailed structure of the binder in separate two of more steps capable of controlling cell property, adhesive strength and coating property.

According to an aspect of the present invention, it provides a binder for battery comprising composite polymer particles having a structure formed of two or more phases different in terms of cell property, adhesive strength and/or coating property.

According to another aspect of the present invention, it provides a method for preparing the binder comprising two or more phases having different physical properties as described above, a binder composition comprising the binder suspended in water or an organic solvent, a slurry containing the binder composition mixed with active materials and electrode materials, an electrode for a lithium secondary battery formed of the slurry, and a lithium secondary battery obtained by using the electrode.

The foregoing and other features and advantages of the present invention will become more apparent from the following detailed description.

### 1. Binder for battery (composite polymer particles)

The binder according to the present invention comprises composite polymer particles having a structure formed of two or more phases having different physical properties in terms of cell property, adhesive strength and/or coating property, wherein the composite polymer particle comprises: (a) a polymer based on monomers capable of controlling the cell property; and either or both of: (b) a polymer comprising monomers capable of controlling the adhesive strength, and (c) a polymer comprising monomers capable of controlling the adhesive strength and the coating property simultaneously.

The composite polymer particle forming the binder for battery according to the present invention is a single particle in which two or more polymeric structures are differentiated by two or more different phases, not present in a single homogeneous phase and preferably interconnected by chemical bonding. The composite polymer particle having two phases forms a core-shell structure, and the composite polymer particle having three or more phases forms a three-dimensional structure like an onion.

Additionally, the monomers forming the binder polymer are those that cannot be dissolved in water or an organic solvent in the state of the polymer thereof.

According to the present invention, the monomers forming the binder polymer are divided into the monomers capable of controlling the cell property, the monomers capable of controlling the adhesive strength, and the monomers capable of controlling the adhesive strength/coating property. From the monomers divided as described above, the polymer capable of controlling the cell property, the polymer capable of controlling the adhesive strength, and the polymer capable of controlling the adhesive strength/coating property are separately polymerized in order to provide the binder for battery comprising composite polymer particles having a structure formed of two or more different phases.

The first group of monomers forming the polymer (a) capable of controlling the cell property include: (1) a styrene-based monomer, for example, styrene, α-methyl styrene, β-ethyl styrene and p-t-butyl styrene; (2) ethylene and propylene; (3) a conjugated diene-based monomer, for example, 1,3-butadiene, 2,3-dimethyl-1,3-butadiene, 1,3-pentadiene, p-perylene and isoprene; (4) a nitrile-containing monomer, for example, acrylonitrile and methacrylonitrile; (5) an acrylic ester, for example, methyl acrylate, ethyl acrylate, propyl acrylate, isopropyl acrylate, n-butyl acrylate, isobutyl acrylate, n-amyl acrylate, isoamyl acrylate, n-hexyl acrylate, 2-ethylhexyl acrylate, hydroxypropyl acrylate and lauryl acrylate; (6) a methacrylic ester, for example, aryl methacrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, hydroxypropyl methacrylate and lauryl methacrylate, or the like. In addition, the above polymer (a) is prepared by homopolymerizing or copolymerizing the above first group of monomers. In the case of copolymerization, 2 to 10 kinds of monomers are preferably used.

The cell property described herein includes, for example, initial capacity, initial efficiency and capacity change caused by repetition of charge/discharge, etc., and means the general evaluation about these properties.

Particularly, acrylonitrile monomer can improve the electrical properties by the triple bond.

Each of the first group of monomers forming the polymer (a) capable of controlling the cell property has the specific surface energy, and the polymer formed from the monomers has a different value of surface energy depending on the mixing ratio of the monomers. The difference of the surface energies can be represented by the difference of the contact angle of the polymer with the electrolyte, because it causes the difference in the affinity with the electrolyte. Preferably, the contact angle of the polymer providing an excellent cell property with the electrolyte is 60 degrees or less. Additionally, the mixing ratio of each monomer, although it is not particularly limited, is preferably 0.01-70 parts by weight for the monomers (1) to (6), respectively, based on 100 parts by weight of the polymer (a), and the composition preferably has a glass transition temperature of -10 to 30 °C and a gel content of 50% or more.

The second group of monomers forming the polymer (b) capable of controlling the adhesive strength include functional monomers of: (1) an acrylamide-based monomer, for example, acrylamide, n-methylolacrylamide and n-butoxymethylacrylamide; (2) a methacrylamide-based monomer, for example, methacrylamide, n-methylolmethacrylamide and n-butoxymethylmethacrylamide; (3) an unsaturated monocarboxylic acid-based monomer, for example, acrylic acid and methacrylic acid; and (4) an unsaturated dicarboxylic acid-based monomer, for example, itaconic acid, maleic acid, fumaric acid, citraconic acid, metaconic acid, glutaconic acid, tetrahydrophthalic acid, crotonic acid, isocrotonic acid and nadic acid, or the like.

The polymer (b) is prepared by homopolymerizing or copolymerizing one or more monomers selected from the above second group of monomers, or by copolymerizing one or more monomers selected from the above second group of monomers with one or more monomers selected from the first group of monomers as described above. The polymer (b) obtained by coplymerization preferably comprises 2 to 15 kinds of monomers.

The second group of monomers forming the polymer (b) capable of controlling the adhesive strength can improve the adhesive strength, because the functional group contained in each monomer has an excellent bonding force to the metal used as a collector. Accordingly, the mixing ratio of each monomer, although it is not particularly limited, is preferably 0.01-20 parts by weight for the second group of monomers (1) to (4), respectively, based on 100 parts by weight of the polymer (b), in order to control the adhesive strength.

The polymer (c) capable of controlling the adhesive strength and coating property simultaneously can be prepared by copolymerizing: (1) the acrylamide-based monomer, particularly, acrylamide; (3) the unsaturated monocarboxylic acid-based monomer, particularly acrylic acid; or (4) the unsaturated dicarboxylic acid-based monomer, particularly itaconic acid, among the second group of monomers as described above, optionally with one or more additional monomers selected from the group consisting of the first group of monomers and the second group of monomers.

Among the second group of monomers, (1) the acrylamide-based monomer, (3) the unsaturated monocarboxylic acid-based monomer, or (4) the unsaturated dicarboxylic acid-based monomer provides different adhesive strengths as well as different coating properties according to the position occupied in the polymer by them. In particular, when the monomer is located at the outside of the polymer, it can control the adhesive strength and the coating property simultaneously.

The mixing ratio of each monomer, although it is not particularly limited, is preferably 0.01-20 parts by weight for the monomers (1), (3) and (4), respectively, based on 100 parts by weight of the polymer (c), and it is possible to control the adhesive strength and the coating property simultaneously by controlling the combination of monomers and the location in the polymer.

In case of the composite polymer particles having a structure formed of two phases, the proportion of the polymer (a) is 50 to 90 wt% and that of the polymer (b) or polymer (c) is 10 to 50 wt%, preferably. In the case of the composite polymer particles having a structure formed of three phases, the proportion of the polymer (a) is 10 to 50 wt%, that of the polymer (b) is 10 to 40 wt% and that of the polymer (c) is 10 to 50 wt%, preferably. Additionally, in the case of the composite polymer particles having a structure formed of four or more phases, it is preferable that the proportion of the repeated polymerization of polymer (a) and polymer (b) is 50 to 90 wt% and the proportion of the polymer (c) is 10 to 50 wt%. Because it is preferable that a polymer polymerized first is completely surrounded with a polymer polymerized later.

In addition, it is preferable that the composite polymer particles have the final particle diameter ranged from 100 nm to 300 nm, the glass transition temperature of each of the polymers (a), (b) and (c) is ranged from -10°C to 30°C and the gel content is 50% or more.

Further, a molecular weight modifier and a crosslinking agent may be used as polymerization additives. Particularly, the amounts of the molecular weight modifier and the crosslinking agent introduced into the polymerization can be controlled in order to control the gel content of the composite polymer particles. The molecular weight modifier that may be used includes t-dodecylmercaptan, n-dodecylmercaptan, n-octylmercaptan, etc., the crosslinking agent that may be used includes 1,3-butanediol diacrylate, 1,3-butanediol dimethacrylate, 1,4-butanediol diacrylate, 1,4-butanediol dimethacrylate, aryl acrylate, aryl methacrylate, trimethylolpropane triacrylate, tetraethyleneglycol diacrylate, tetraethyleneglycol dimethacrylate, divinylbenzene, or the like.

Any compound that causes the polymerization reaction may be used as a polymerization initiator, wherein the initiator compound includes, for example, ammonium persulfate, potassium persulfate, benzoyl peroxide, azobisisobutyronitrile, butyl hydroperoxide, cumene hydroperoxide, etc., and the water soluble or redox polymerization initiators are more preferable among them.

The composite polymer particles used in the present invention can be obtained by a conventional polymerization method, such as emulsion polymerization, suspension polymerization, dispersion polymerization and seeded polymeriation. Generally, the temperature and the time for the polymerization are about 50-200°C and about 0.5-20 hours, respectively, although they may be optionally selected by the polymerization method, the kind of the polymerization initiator, or the like.

According to an embodiment of the present invention, the composite polymer particles can be prepared by polymerizing the polymer (a) from the first group of monomers improving the cell property, and adding the second group of monomers improving the adhesive strength to the polymer (a) in order to polymerize the polymer (b) essentially comprising the second group of monomers into the structure having a phase different from that of the polymer (a).

According to another embodiment of the present invention, the composite polymer particles can be prepared by polymerizing the polymer (a) from the first group of monomers improving the cell property, and polymerizing the polymer (c) improving the adhesive strength and the coating property to the polymer (a) into the structure having a phase different from that of the polymer (a).

According to another embodiment of the present invention, the composite polymer particles can be prepared by polymerizing the polymer (a) from the first group of monomers improving the cell property, adding the second group of monomers improving the adhesive strength to the polymer (a) in order to polymerize the polymer (b) essentially comprised of the second group of monomers into the structure having a phase different from that of the polymer (a), and polymerizing the polymer (c) improving the adhesive strength and the coating property thereto into the structure having a phase different from that of the polymer (a) and that of the polymer (b).

According to another embodiment of the present invention, the composite polymer particles formed of four or more phases can be prepared by polymerizing the polymer (a), the polymer (b) and the polymer (c), successively, wherein each of the steps for polymerizing the polymer (a), (b) and (c) is carried out two or more times using different monomers.

### 2. Binder composition for battery electrode

The binder for a battery according to the present invention may be dissolved in a solvent or dispersed in a dispersion medium by a conventional method to form a binder composition.

The liquid material used as the dispersion medium for the binder composition of the present invention, although it is not particularly limited, is preferably present in the liquid state at room temperature under the atmospheric pressure, so that the slurry for a battery electrode as described hereinafter can maintain the form of the composite polymer particles, when it is coated and dried on a collector.

Any dispersion medium capable of dispersing the said composite polymer particles and active materials may be used, and the particular examples of the dispersion medium includes, for example, water; alcohols such as methanol, ethanol, propanol, isopropanol, butanol, isobutanol, s-butanol, t-butanol, pentanol, isopentanol and hexanol; ketons such as acetone, methyl ethyl ketone, methyl propyl ketone, ethyl propyl ketone, cyclopentanone, cyclohexanone and cycloheptanone; ethers such as methyl ethyl ether, diethyl ether, dipropyl ether, diisopropyl ether, dibutyl ether, diisobytyl ether, di-n-amyl ether, diisoamyl ether, methyl propyl ether, methyl isopropyl ether, methyl butyl ether, ethyl propyl ether, ethyl isobutyl ether, ethyl n-amyl ether, ethyl isoamyl ether and tetrahydrofuran; lactones such as γ-butyrolactone and δ-butyrolactone; lactames such as β-lactame; cycloaliphatic hydrocarbons such as cyclopentane, cyclohexane and cycloheptane; aromatic hydrocarbons such as benzene, toluene, o-xylene, m-xylene, p-xylene, ethylbenzene, propylbenzene, isopropylbenzene, butylbenzene, isobutylbenzene and n-amylbenzene; aliphatic hydrocarbons such as heptane, octane, nonane and decane; linear or cyclic amides such as dimethylformamide and N-methylpyrrolidone; esters such as methyl lactate, ethyl lactate, propyl lactate, butyl lactate and methyl benzoate; and liquid materials forming the solvent for the electrolyte as described hereinafter, or the like. Particularly, considering the process for producing the electrode, the dispersion medium having a boiling point of 80°C or higher is preferably used, with 85°C or higher more preferably.

Additionally, if desired, other additives described hereinafter referring to the slurry or other shelf stabilizers, etc., may be further added.

### 3. Slurry for battery electrodes

The slurry of the present invention is obtained by mixing the binder composition of the present invention and active materials, optionally with additives.

The electrode active materials are important in that they determine the cell capacity. The active materials used for cathode (positive electrode) include, for example, a conductive polymer such as polypyrrole, polyaniline, polyacetylene and polythiophen, a metal oxide such as lithium cobalt oxide, lithium nickel oxide and lithium manganese oxide, and a composite metal oxide formed of a metal oxide and an electroconductive polymer. In addition, the active materials used for anode (negative electrode) include, for example, a carbonaceous material such as a natural graphite, an artificaial graphite, MPCF, MCMB, PIC, a sintered phenolic resin, a PAN-based carbon fiber and graphite, a conductive polymer such as polyacene, and a lithium-based metal such as lithium metal and a lithium alloy, or the like.

If desired, in addition to the active materials, a conductive agent, a viscosity modifier, a supplementary binder, etc., may be added to the electrode slurry. The viscosity modifier that may be used includes a water soluble polymer, for example, carboxymethyl cellulose, carboxyethyl cellulose, ethyl cellulose, hydroxymethyl cellulose, hydroxypropyl cellulose, carboxyethylmethyl cellulose, polyethylene oxide, ethylene glycol, or the like.

### 4. Electrode for lithium secondary battery

The electrode of the present invention is obtained by coating the slurry for battery electrode on a collector and removing the dispersion medium by drying, etc. in order to bond the active materials to the collector and to bond the active materials themselves.

In general, a collector formed of a metal such as iron, copper, aluminum, nickel, etc., may be used, although there is no specific limitation as long as a collector formed of a conductive material is used.

### 5. Lithium secondary battery

The lithium secondary battery of the present invention comprises the electrode of the present invention as described above as the positive electrode and/or negative electrode. The electrolyte solution of this lithium secondary battery may be a conventional electrolyte solution, and the electrolyte having a function as a battery depending on the kinds of the negative electrode active materials and the positive electrode active materials may be selected. For example, for the electrolyte of the lithium secondary battery, LiPF₆, LiClO₄, LiBF₄, LiN(SO₂CF₃)₂, etc., may be used, and for the solvent, mixture of any high-dielectric solvents such as EC or PC and any low-viscosity solvents such as alkyl carbonates(DEC, DMC, EMC, etc.) may be used.

### Best Mode for Carrying Out the Invention

The present invention will be explained in detail by using the following examples. However, the following examples are for illustrative purposes only and the present invention is not limited thereto.

### EXAMPLE 1

### [Binder composition]

196.0 g of deionized water was introduced into a reactor and the temperature was increased to 75°C. When the temperature of deionized water reached to 75°C, 49.8 g of styrene, 46.5 g of 1,3-butadiene and 0.65 g of sodium lauryl sulfate were added thereto. And then, while maintaining the temperature inside the reactor at 75°C, 0.32 g of potassium persulfate dissolved in 10.0 g of deionized water was introduced to complete the polymerization of polymer (a).

To the polymer (a), an emulsified mixture of 93.0 g of deionized water, 30.0 g of styrene, 60.1 g of butyl acrylate, 0.8 g of aryl methacrylate, 5.4 g of itaconic acid and 0.15 g of sodium lauryl sulfate were introduced in portions for 3 hours, while 0.21 g of potassium persulfate dissolved in 10.0 g of deionized water was also introduced in portions for 3 hours to complete the polymerization of polymer (b).

The pH of the composite polymer product obtained as described above was adjusted to pH 7 using potassium hydroxide to form a binder composition for an anode. And then, 500 g of NMP was added to 50 g of the binder composition and water was removed by distillation at 90°C in order to form a binder composition for cathode.

The specific physical properties of the polymerized binder were determined in three categories as follows. First, the particle diameter determined by a light scattering system was 161 nm and the glass transition temperature determined by DSC (Differential Scanning Calorimeter) at scanning rate of 10°C/min was -3°C. In addition, the gel content determined by using toluene as a solvent was 85%.

### [Slurry]

94 g of a natural graphite, 1.0 g of a conductive polymer, 2.5 g of the binder and 2.5 g of a water-soluble polymer were mixed to the total solid content of 45% by using water as a dispersion medium in order to form the slurry for an anode.

Additionally, 94 g of LiCoO₂, 1.0 g of a conductive polymer and 5.0 g of the binder were mixed to the total solid content of 45% by using NMP as a dispersion medium in order to form the slurry for a cathode.

### [Electrode]

The slurry for anode was coated on a copper foil and the slurry for cathode was coated on an aluminum foil, in the thickness of 200 µm in each of cases, and then dried at 90°C for 10 minutes and at 120°C for 10 minutes at the atmospheric pressure, and at 120°C for 2 hours under vacuum. Each of the dried electrodes was pressed at the porosity of 30% to form the electrodes completely.

### [Cell]

A separator formed of polyolefin microporous membrane was inserted between the dried cathode and anode to provide a coin-type cell. Then, electrolyte solution obtained from LIPF₆ electrolyte dissolved in a mixed solvent consisting of EC:EMC=1:2 (volume ratio) at the concentration of 1 mol/l, was introduced to form the cell completely.

### [Evaluation for the cell performance]

For the evaluation of the cell property, 3 cycles and 30 cycles of charge/discharge were repeated by static current method at 0.1 C, wherein initial capacity, initial efficiency, the capacity after 3 cycles and the capacity after 30 cycles were compared. The evaluation result was defined as the average obtained by forming 5 or more coin-type cells for the same binder composition and evaluating their performances.

### [Evaluation for the adhesive strength]

In order to determine the adhesive strength between active materials and a collector, after attaching epoxy plate to the surface of the aforesaid electrode to fix the active materials, the collector cut into a constant thickness was peeled to determine 180° peel strength. The evaluation result for the peel strength was defined in the average of 5 or more times of determination values.

### [Evaluation for the coating property]

In order to evaluate the coating property, slurry having the solid content increased from the original 4.5% to 51% was formed. Similarly, the slurry was coated on a collector at the thickness of 200 µm and the coating state was signified by the signs "O" and "X", wherein "O" means a state in which the slurry was completely coated on the collector, and "X" means a state in which a portion of surface not coated with the slurry was present.

### EXAMPLE 2

### [Binder Composition]

The same polymerization method as in EXAMPLE 1 was repeated to form polymer (a), and then an emulsified mixture of 93.0 g of deionized water, 30.0 g of styrene, 60.1 g of butyl acrylate, 0.8 g of aryl methacrylate, 2.0 g of itaconic acid, 1.4 g of acrylamide, 2.0 g of acrylic acid and 0.15 g of sodium lauryl sulfate were introduced to the polymer (a) in portions for 3 hours, while 0.21 g of potassium persulfate dissolved in 10.0 g of deionized water was introduced in portions for 3 hours to complete the polymerization of polymer (c).

The binder composition was prepared by the same method as in EXAMPLE 1, and the same processes for determining the specific physical properties as in EXAMPLE 1 were repeated. As the result, the particle diameter was 158 nm, the glass transition temperature was -5°C, and the gel content was 86%.

In addition, the method for preparing slurry from the binder composition, the cell production method, the evaluation for the cell performance, the evaluation for the adhesive strength and coating property, were the same as in EXAMPLE 1.

COMP. EX. 3, EXAMPLE 4 to EXAMPLE 7

EXAMPLE 1 or EXAMPLE 2 was repeated, except that the monomers used for the binder composition were varied as described in the following Table 1 to polymerize the composite polymer particles formed of polymer (a) and polymer (b), or polymer (a) and polymer (c).

Other methods for preparing the binder composition, determining the specific physical properties, preparing the slurry, forming the cell, and evaluating the cell performance, the adhesive strength and the coating property were performed as described in EXAMPLE 1.

**[Table 1]**

| | | | | | <expressed in g units> | | | | | |
|---|---|---|---|---|---|---|---|---|---|---|
| | COMP. EX. 3 | | EXAMPLE 4 | | EXAMPLE 5 | | EXAMPLE 6 | | EXAMPLE 7 | |
| | Polymer (a) | Polymer (a) | Polymer (a) | Polymer (b) | Polymer (a) | Polymer (c) | Polymer (a) | Polymer (c) | Polymer (a) | Polymer (c) |
| Styrene | 49.8 | 31.8 | 31.8 | 47.0 | 25.0 | 30.0 | 25.0 | 30.0 | 31.8 | 47.0 |
| Methyl methacrylate | | | | | 24.8 | | | | | |
| Acrylonitrile | | | | | | | 24.8 | | | |
| Aryl methacrylate | | 0.8 | 0.8 | | | 0.8 | | 0.8 | 0.8 | |
| Butyl acrylate | | 63.7 | 63.7 | | | 60.1 | | 60.1 | 63.7 | |
| 1,3-butadiene | 46.5 | | | 43.9 | 46.5 | | 46.5 | | | 43.9 |
| Acrylamide | | | | | | 1.4 | | 1.4 | | 1.4 |
| Itaconic acid | | | | 5.4 | | 2.0 | | 2.0 | | 2.0 |
| Acrylic acid | | | | | | 2.0 | | 2.0 | | 2.0 |
| Particle diameter (nm) | 155 | | 163 | | 160 | | 161 | | 158 | |
| Glass transition temperature (°C) | -4 | | -4 | | -3 | | -5 | | -4 | |
| Gel content (%) | 85 | | 83 | | 85 | | 86 | | 85 | |

### COMPARATIVE EXAMPLES 1 AND 2, AND EXAMPLES 8 AND 9

EXAMPLE 1 or EXAMPLE 2 was repeated, except that the monomers used for the binder composition were varied as described in the following Table 2 to polymerize the composite polymer particles with two, three or four phases. However, in order to control the sizes of the composite polymer particles uniformly, the amount of sodium lauryl sulfate introduced to the polymerization of polymer (a) was changed to 0.23 g, 0.71 g and 1.1 g, respectively.

Other methods for preparing the binder composition, determining the specific physical properties, preparing the slurry, forming the cell, and evaluating the cell performance, the adhesive strength and the coating property were performed as described in EXAMPLE 1.

**[Table 2]**

| | | | | <expressed in g units> | | | | | |
|---|---|---|---|---|---|---|---|---|---|
| | COMP. EX. 1 | COMP. EX. 2 | EXAMPLE 8 | | | EXAMPLE 9 | | | |
| | Polymer (c) | Polymer (c) | Polymer (a) | Polymer (b) | Polymer (c) | Polymer (a) | Polymer (a) | Polymer (b) | Polymer (c) |
| Styrene | 30.0 | 47.0 | 25.0 | 30.0 | 30.0 | 25.0 | 25.0 | 30.0 | 30.0 |
| Acrylonitrile | | | 24.8 | | | 24.8 | 24.8 | | |
| Aryl methacrylate | 0.8 | | | 0.8 | 0.8 | | | 0.8 | 0.8 |
| Butyl acrylate | 60.1 | | | 60.1 | 60.1 | | | 60.1 | 60.1 |
| 1,3-butadiene | | 43.9 | 46.5 | | | 46.5 | 46.5 | | |
| Acrylamide | 1.4 | 1.4 | | | 1.4 | | | | 1.4 |
| Itaconic acid | 2.0 | 2.0 | | 5.4 | 2.0 | | | 5.4 | 2.0 |
| Acrylic acid | 2.0 | 2.0 | | | 2.0 | | | | 2.0 |
| Particle diameter (nm) | 164 | 153 | 167 | | | 168 | | | |
| Glass transition temperature (°C) | -2 | -4 | -3 | | | -4 | | | |
| Gel content (%) | 86 | 84 | 84 | | | 83 | | | |

### EXAMPLE 10 to EXAMPLE 14

EXAMPLE 2 was repeated, except that the monomers used to polymerize the composite polymer particles were varied as described in the following Table 3, in order to modify the glass transition temperature and gel content of the composite polymer particles.

Other methods for preparing the binder composition, determining the specific physical properties, preparing the slurry, forming the cell, and evaluating the cell performance, the adhesive strength and the coating property were performed as described in EXAMPLE 1.

**[Table 3]**

| | | | | | <expressed in g units> | | | | | |
|---|---|---|---|---|---|---|---|---|---|---|
| | EXAMPLE 10 | | EXAMPLE 11 | | EXAMPLE 12 | | EXAMPLE 13 | | EXAMPLE 14 | |
| | Polymer (a) | Polymer (c) | Polymer (a) | Polymer (c) | Polymer (a) | Polymer (c) | Polymer (a) | Polymer (c) | Polymer (a) | Polymer (c) |
| Styrene | 25.0 | 43.0 | 25.0 | 56.0 | 25.0 | 30.0 | 25.0 | 30.0 | 25.0 | 30.0 |
| t-dodecyl mercaptane | | | | | | | | 0.3 | | 0.8 |
| Acrylonitrile | 24.8 | | 24.8 | | 24.8 | | 24.8 | | 24.8 | |
| Aryl methacrylate | | 0.8 | | 0.8 | | 2.0 | | 0.8 | | 0.8 |
| Butyl acrylate | | 47.1 | | 34.1 | | 60.1 | | 60.1 | | 60.1 |
| 1,3-butadiene | 46.5 | | 46.5 | | 46.5 | | 46.5 | | 46.5 | |
| Acrylamide | | 1.4 | | 1.4 | | 1.4 | | 1.4 | | 1.4 |
| Itaconic acid | | 2.0 | | 2.0 | | 2.0 | | 2.0 | | 2.0 |
| Acrylic acid | | 2.0 | | 2.0 | | 2.0 | | 2.0 | | 2.0 |
| Particle diameter (nm) | 158 | | 163 | | 160 | | 161 | | 158 | |
| Glass transition temperature (°C) | 14 | | 37 | | -3 | | -5 | | -4 | |
| Gel content (%) | 85 | | 83 | | 95 | | 63 | | 44 | |

### EXAMPLE 15 to EXAMPLE 17

The same formulation as in EXAMPLE 6 was used, except that the amount of sodium lauryl sulfate introduced to the polymerization of polymer (a) was changed to 1.15 g, 0.3 g and 0.18 g, respectively, as described in the following Table 4, in order to modify the particle size of the composite polymer particles.

Other methods for preparing the binder composition, determining the specific physical properties, preparing the slurry, forming the cell, and evaluating the cell performance, the adhesive strength and the coating property were performed as described in EXAMPLE 1.

**[Table 4]**

| | | | <expressed in g units> | | | |
|---|---|---|---|---|---|---|
| | EXAMPLE 15 | | EXAMPLE 16 | | EXAMPLE 17 | |
| | polymer (a) | polymer (c) | polymer (a) | polymer (c) | polymer (a) | polymer (c) |
| Styrene | 25.0 | 30.0 | 25.0 | 30.0 | 25.0 | 30.0 |
| t-dodecyl mercaptane | | | | | | |
| Acrylonitrile | 24.8 | | 24.8 | | 24.8 | |
| Aryl methacrylate | | 0.8 | | 0.8 | | 0.8 |
| Butyl acrylate | | 60.1 | | 60.1 | | 60.1 |
| 1,3-butadiene | 46.5 | | 46.5 | | 46.5 | |
| Acrylamide | | 1.4 | | 1.4 | | 1.4 |
| Itaconic acid | | 2.0 | | 2.0 | | 2.0 |
| Acrylic acid | | 2.0 | | 2.0 | | 2.0 |
| Particle diameter (nm) | 93 | | 219 | | 314 | |
| Glass transition temperature (°C) | -5 | | -3 | | -3 | |
| Gel content (%) | 85 | | 83 | | 86 | |

### [Evaluation Results]

The results of the evaluation for the cell performance, the adhesive strength and the coating property obtained from the above EXAMPLES 1, 2, 4-17 and COMPARATIVE EXAMPLES 1, 2 AND 3 are summarized in the following Table 5.

**[Table 5]**

| | Cell performance | | | | adhesive strength (g/cm) | Coating property |
|---|---|---|---|---|---|---|
| | Initial capacity (mAh/g) | Initial efficiency (%) | Capacity (3 cycles) (mAh/g) | Capacity (30 cycles) (mAh/g) | | |
| EXAMPLE 1 | 299 | 87.8 | 280 | 247 | 20.3 | X |
| EXAMPLE 2 | 298 | 88.0 | 278 | 245 | 21.2 | ○ |
| COMP. EX. 3 | 298 | 87.9 | 280 | 247 | 7.2 | X |
| EXAMPLE 4 | 297 | 87.9 | 281 | 248 | 18.8 | X |
| EXAMPLE 5 | 301 | 88.3 | 283 | 252 | 21.3 | ○ |
| EXAMPLE 6 | 307 | 89.6 | 295 | 272 | 21.8 | ○ |
| EXAMPLE 7 | 297 | 87.8 | 280 | 246 | 19.7 | ○ |
| COMP. EX. 1 | 294 | 87.5 | 276 | 241 | 21.3 | ○ |
| COMP. EX. 2 | 295 | 87.5 | 279 | 245 | 19.8 | ○ |
| EXAMPLE 8 | 305 | 89.8 | 291 | 269 | 21.2 | ○ |
| EXAMPLE 9 | 303 | 89.6 | 286 | 268 | 21.4 | ○ |
| EXAMPLE 10 | 309 | 89.7 | 296 | 272 | 24.7 | ○ |
| EXAMPLE 11 | 310 | 89.8 | 298 | 274 | 19.2 | ○ |
| EXAMPLE 12 | 308 | 89.6 | 296 | 272 | 21.8 | ○ |
| EXAMPLE 13 | 308 | 89.8 | 298 | 273 | 19.9 | ○ |
| EXAMPLE 14 | 309 | 89.7 | 298 | 275 | 15.3 | ○ |
| EXAMPLE 15 | 308 | 89.7 | 298 | 273 | 19.6 | ○ |
| EXAMPLE 16 | 307 | 89.8 | 297 | 275 | 23.7 | ○ |
| EXAMPLE 17 | 309 | 89.7 | 297 | 275 | 20.1 | ○ |

As shown in Table 5, comparative examples 1 and 2 using the binder comprised of polymer (c) alone show a low cell property due to the absence of the component of polymer (a) capable of improving the cell property. Compared with this, the other examples using the binder comprised of composite polymer particles having a structured form of two or more phases including polymer (a) phase, have a tendency to improve the cell property.

In particular, when the component of polymer (a) comprises acrylonitrile, the cell property was greatly improved. It seems that this is because the triple bond in acrylonitrile improves the electrical property.

In addition, the adhesive strength was particularly increased, when the component of polymer (c) comprises a second group of monomers such as itaconic acid, acrylic acid or acrylamide. It seems that this is because of the excellent bonding force between the functional groups contained in the second group of monomer component and a collector.

Further, when the glass transition temperature ranged from -10°C to 30°C, the gel content was 50% or more and the particle size ranges from 100 nm to 300 nm, the adhesive strength was remarkably improved.

When the component of polymer (b) or polymer (c) comprises a controlled amount of a second group of monomer component such as itaconic acid, acrylic acid or acrylamide, the coating property was excellent. However, when the second group of monomer was not used, the coating property was decreased.

### Industrial Applicability

As can be seen from the foregoing, according to the present invention, the binder having a structure formed of two or more phases, a particle diameter ranged from 100 nm to 300 nm, a glass transition temperature ranged from -10°C to 30°C and the gel content of 50% or more provides excellent adhesive strength, cell property and coating property as compared with a conventional binder.

Therefore, the binder according to the present invention may be utilized in a process for manufacturing a lithium secondary battery to improve the productivity and to provide a lithium secondary battery having an excellent cell property.

## Claims

1. A binder comprising composite polymer particles having a structured form of two or more phases having different physical properties in terms of cell property, adhesive strength and/or coating property, wherein the composite polymer particle comprises:
(a) a polymer based on monomers capable of controlling the cell property, wherein the polymer (a) is polymerized from one or more monomers selected from the first group of monomers consisting of styrene-based monomers, ethylene, propylene, conjugated diene-based monomers, nitrile-containing monomers, acrylic esters and methacrylic esters; and either or both of:
(b) a polymer based on monomers capable of controlling the adhesive strength, wherein the polymer (b) is homopolymerized or copolymerized from one or more monomers selected from the second monomer group consisting of acrylamide-based monomers, methacrylamide-based monomers, unsaturated monocarboxylic acid-based monomers and unsaturated dicarboxylic acid-based monomers, or is copolymerized from one or more monomers selected from the second monomer group and one or more monomers selected from the first group of monomers, and
(c) a polymer based on monomers capable of controlling the adhesive strength and the coating property simultaneously, wherein the polymer (c) is copolymerized from acrylamide-based monomers, unsaturated monocarboxylic acid-based monomers and unsaturated dicarboxylic acid-based monomers;
wherein the composite polymer particle is a single particle in which two or more polymeric structures are differentiated by two or more different phases, not present in a single homogeneous phase, whereby the composite polymer particle having two phases forms a core-shell structure, and the composite polymer particle having three or more phases forms a threedimensional structure like an onion.

2. The binder according to claim 1, wherein the first group of monomers comprises:
styrene, α-methyl styrene, β-methyl styrene, p-t-butyl styrene; ethylene, propylene; 1,3-butadiene, 2,3-dimethyl-1,3-butadiene, 1,3-pentadiene, p-perylene, isoprene; acrylonitrile, methacrylonitrile; methyl acrylate, ethyl acrylate, propyl acrylate, isopropyl acrylate, n-butyl acrylate, isobutyl acrylate, n-amyl acrylate, isoamyl acrylate, n-hexyl acrylate, 2-ethyl hexyl acrylate, hydroxypropyl acrylate, lauryl acrylate; methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, hydroxypropyl methacrylate and lauryl methacrylate.

3. The binder according to claim 1, wherein the second group of monomers comprises:
acrylamide, n-methylolacrylamide, n-butoxymethylacrylamide; methacrylamide, n-methylolmethacrylamide, n-butoxymethylmethacrylamide; acrylic acid, methacrylic acid; itaconic acid, maleic acid, fumaric acid, citraconic acid, metaconic acid, glutaconic acid, tetrahydrophthalic acid, crotonic acid, isocrotonic acid and nadic acid.

4. The binder according to claim 1, wherein the polymer (c) is copolymerized with one or more additional monomers selected from the first group of monomers and the second group of monomers.

5. The binder according to claim 1, wherein the polymer (c) is a copolymer comprising acrylamide, acrylic acid and itaconic acid.

6. The binder according to claim 1, wherein the binder comprises the composite polymer particles formed of four or more phases prepared by polymerizing the polymer (a), polymerizing the polymer (b) and polymerizing the polymer (c), successively, in which each of the steps for polymerizing the polymer (a), (b) and (c) is carried out in two or more times using different monomers.

7. The binder according to claim 1, wherein the composite polymer particles having a structured form of two phases comprises 50 to 90 wt% of the polymer (a) and 10 to 50 wt% of the polymer (b) or polymer (c), the composite polymer particles having a structured form of three phases comprises 10 to 50 wt% of the polymer (c), and the composite polymer particles having a structure of four or more phases comprises 50 to 90 wt% of the repeated polymerization of polymer (a) and polymer (b) and 10 to 50 wt% of the polymer (c).

8. The binder according to claim 1, wherein the final particle size ranges from 100nm to 300nm.

9. The binder according to claim 1, wherein the glass transition temperature of each of polymer (a), polymer (b) and polymer (c) ranges from -10°C to 30°C.

10. The binder according to claim 1, wherein the gel content is 50% or more.

11. A slurry for an electrode of a lithium secondary battery comprising the binder as defined in claim 1 and active materials.

12. An electrode for a lithium secondary battery obtained by coating the slurry as defined in claim 11 on a collector.

13. A lithium secondary battery comprising the electrode as defined in claim 12.

14. The binder according to claim 1, wherein the composite polymer particle comprises the polymer (a), the polymer (b) and the polymer (c) in turn, starting from the inside of the binder.

15. The binder according to claim 1, wherein the inside polymer is surrounded with the outside polymer and the physical properties of both polymers are different.

## Patentansprüche

1. Ein Binder umfassend Kompositpolymerpartikel, welche eine strukturierte Form aus zwei oder mehr Phasen mit unterschiedlichen physikalischen Eigenschaften hinsichtlich der Zelleneigenschaft, der Haftstärke und/oder der Beschichtungseigenschaft aufweisen, worin der Kompositpolymerpartikel umfasst:
(a) ein Polymer basierend auf Monomeren, welche zur Steuerung der Zelleneigenschaft geeignet sind, wobei das Polymer (a) aus einem oder mehreren Monomeren polymerisiert ist, ausgewählt aus der ersten Monomergruppe bestehend aus Styrol-basierten Monomeren, Ethylen, Propylen, Monomeren auf Basis von konjugierten Dien, Nitril-enthaltenden Monomeren, Acrylestern und Methacrylestern; und entweder einem oder beiden von:
(b) einem Polymer basierend auf Monomeren, welche zur Steuerung der Haftstärke geeignet sind, wobei das Polymer (b) aus einem oder mehreren Monomeren homopolymerisiert oder copolymerisiert ist, ausgewählt aus der zweiten Monomergruppe, bestehend aus Acrylamid-basierten Monomeren, Methacrylamid-basierten Monomeren, Monomeren auf Basis von ungesättigten Monocarboxylsäuren und Monomeren auf Basis von ungesättigten Dicarboxylsäuren, oder aus einem oder mehreren Monomeren, ausgewählt aus der zweiten Monomergruppe, und aus einem oder mehreren Monomeren, ausgewählt aus der ersten Monomergruppe copolymerisiert ist, und
(c) ein Polymer basierend auf Monomeren, welche geeignet sind, gleichzeitig die Haftstärke und die Beschichtungseigenschaft zu steuern, wobei das Polymer (c) aus Acrylamid-basierten Monomeren, Monomeren auf Basis von ungesättigten Monocarboxylsäuren und Monomeren auf Basis von ungesättigten Dicarboxylsäuren copolymerisiert ist;
worin der Kompositpolymerpartikel ein einzelner Partikel ist, in welchem zwei oder mehr Polymerstrukturen durch zwei oder mehr unterschiedliche Phasen differenziert sind, nicht vorliegend in einer einzelnen homogenen Phase, wobei der Kompositpolymerpartikel mit zwei Phasen eine Kern-Schale Struktur ausbildet, und der Kompositpolymerpartikel mit drei oder mehr Phasen eine dreidimensionale zwiebelartige Struktur ausbildet.

2. Der Binder nach Anspruch 1, **dadurch gekennzeichnet, dass** die erste Monomergruppe umfasst:
Styrol, α-Methylstyrol, β-Methylstyrol, p-t-Butylstyrol; Ethylen, Propylen; 1,3-Butadien, 2,3-Dimethyl-1,3-Butadien, 1,3-Pentadien, p-Perylen, Isopren; Acrylnitril, Methacrylnitril; Methylacrylat, Ethylacrylat, Propylacrylat, Isopropylacrylat, n-Butylacrylat, Isobutylacrylat, n-Amylacrylat, Isoamylacrylat, n-Hexylacrylat, 2-Ethylhexylacrylat, Hydroxypropylacrylat, Laurylacrylat; Methylmethacrylat, Ethylmethacrylat, Propylmethacrylat, Isopropylmethacrylat, n-Butylmethacrylat, Isobutylmethacrylat, n-Amylmethacrylat, Isoamylmethacrylat, n-Hexylmethacrylat, 2-Ethylhexylmethacrylat, Hydroxypropylmethacrylat und Laurylmethacrylat.

3. Der Binder nach Anspruch 1, **dadurch gekennzeichnet, dass** die zweite Monomergruppe umfasst:
Acrylamid, n-Methylolacrylamid, n-Butoxymethylacrylamid; Methacrylamid, n-Methylolmethacrylamid, n-Butoxymethylmethacrylamid; Acrylsäure, Methacrylsäure; Itaconsäure, Maleinsäure, Fumarsäure, Citraconsäure, Metaconsäure, Glutaconsäure, Tetrahydrophthalsäure, Crotonsäure, Isocrotonsäure und Nadicsäure.

4. Der Binder nach Anspruch 1, **dadurch gekennzeichnet, dass** das Polymer (c) mit einem oder mehreren zusätzlichen Monomeren, ausgewählt aus der ersten Monomergruppe und der zweiten Monomergruppe, copolymerisiert ist.

5. Der Binder nach Anspruch 1, **dadurch gekennzeichnet, dass** das Polymer (c) ein Copolymer ist, umfassend Acrylamid, Acrylsäure und Itaconsäure.

6. Der Binder nach Anspruch 1, **dadurch gekennzeichnet, dass** der Binder Kompositpolymerpartikel gebildet aus vier oder mehr Phasen umfasst, welche durch Polymerisation von Polymer (a), Polymerisation von Polymer (b) und Polymerisation von Polymer (c) auf sukzessive Weise hergestellt sind, wobei jeder der Schritte zur Polymerisation von Polymer (a), (b) und (c) unter Verwendung unterschiedlicher Monomere zweifach oder mehrfach durchgeführt wird.

7. Der Binder nach Anspruch 1, **dadurch gekennzeichnet, dass** die Kompositpolymerpartikel, welche eine strukturierte Form aus zwei Phasen aufweisen, 50 bis 90 Gew% des Polymers (a) und 10 bis 50 Gew% des Polymers (b) oder des Polymers (c) umfassen, dass die Kompositpolymerpartikel, welche eine strukturierte Form aus drei Phasen aufweisen, 10 bis 50 Gew% des Polymers (c) umfassen, und dass die Kompositpolymerpartikel, welche eine Struktur aus vier oder mehr Phasen aufweisen, 50 bis 90 Gew% der wiederholten Polymerisation des Polymers (a) und des Polymers (b) und 10 bis 50 Gew% des Polymers (c) umfassen.

8. Der Binder nach Anspruch 1, **dadurch gekennzeichnet, dass** die finale Partikelgröße im Bereich von 100 nm bis 300 nm liegt.

9. Der Binder nach Anspruch 1, **dadurch gekennzeichnet, dass** die Glasübergangstemperatur von jedem Polymer (a), Polymer (b) und Polymer (c) im Bereich von -10 °C bis 30 °C liegt.

10. Der Binder nach Anspruch 1, **dadurch gekennzeichnet, dass** der Gelanteil 50% oder mehr beträgt.

11. Eine Aufschlämmung für eine Elektrode einer Lithiumsekundärbatterie umfassend den Binder, nach der Definition in Anspruch 1, und aktive Materialien.

12. Eine Elektrode für eine Lithiumsekundärbatterie erhalten durch Auftragen (Coating) der Aufschlämmung, nach der Definition in Anspruch 11, auf einen Kollektor.

13. Eine Lithiumsekundärbatterie, umfassend die Elektrode nach der Definition in Anspruch 12.

14. Der Binder nach Anspruch 1, **dadurch gekennzeichnet, dass** der Kompositpolymerpartikel ausgehend vom Inneren des Binders nacheinander das Polymer (a), das Polymer (b) und das Polymer (c) umfasst.

15. Der Binder nach Anspruch 1, **dadurch gekennzeichnet, dass** das Innenpolymer mit dem Außenpolymer umgeben ist und dass die physikalischen Eigenschaften beider Polymere unterschiedlich sind.

## Revendications

1. Un liant comprenant des particules de polymère composites formées en structure à deux ou plusieurs phases ayant des propriétés physiques différentes en termes de propriété cellulaire, force adhésive et/ou propriété de revêtement, dans lequel la particule de polymère composite comprend :
(a) un polymère à base de monomères capable de contrôler la propriété cellulaire,
dans lequel le polymère (a) est polymérisé à partir d'un ou de plusieurs monomères choisis parmi un premier groupe de monomères comprenant des monomères à base de styrène, d'éthylène, de propylène, des monomères à base de diène conjugué, des monomères contenant du nitrile, des esters acryliques et méthacryliques ; et soit l'un, soit l'un et l'autre :
(b) un polymère à base de monomères capable de contrôler la force adhésive, dans lequel le polymère (b) est homopolymérisé ou copolymérisé à partir d'un ou de plusieurs monomères choisis parmi un second groupe de monomères comprenant des monomères à base d'acrylamide, des monomères à base de méthacrylamide, des monomères à base d'acide monocarboxylique insaturé et des monomères à base d'acide dicarboxylique insaturé, ou est copolymérisé à partir d'un ou de plusieurs monomères choisis parmi le second groupe de monomères et d'un ou de plusieurs monomères choisis parmi le premier groupe de monomères, et
(c) un polymère à base de monomères capable de contrôler la force adhésive et la propriété de revêtement simultanément, dans lequel le polymère (c) est copolymérisé à partir de monomères à base d'acrylamide, de monomères à base d'acide monocarboxylique insaturé et de monomères à base d'acide dicarboxylique insaturé ;
dans lequel la particule de polymère composite est une particule simple dans laquelle au moins deux structures polymères sont différenciées par au moins deux phases différentes, non présentes dans une phase homogène unique, la particule de polymère composite à deux phases formant une structure noyau-enveloppe et la particule de polymère composite à au moins trois phases formant une structure tridimensionnelle comme un oignon.

2. Le liant selon la revendication 1, dans lequel le premier groupe de monomères comprend :
le styrène, l'α-méthyl-styrène, le β-méthyl-styrène, le p-t-butyl-styrène ; l'éthylène, le propylène ; le 1,3-butadiène, le 2,3-diméthyl-1,3-butadiène, le 1,3-pentadiène, le p-pérylène, l'isoprène ; l'acrylonitrile, le méthacrylonitrile ; le méthylacrylate, l'éthylacrylate, le propylacrylate, l'isopropylacrylate, le n-butylacrylate, l'isobutylacrylate, le n-amylacrylate, l'isoamylacrylate, le n-hexylacrylate, le 2-éthyl- hexylacrylate, l'hydroxypropylacrylate, le laurylacrylate , le méthacrylate de méthyle, le méthacrylate d'éthyle, le méthacrylate de propyle, le méthacrylate d'isopropyle, le méthacrylate de n-butyle, le méthacrylate d'isobutyle, le méthacrylate de n-amyle, le méthacrylate d'isoamyle, le méthacrylate de n-hexyle, le méthacrylate de 2-éthilhexyle, le méthacrylate d'hydroxypropyle et le méthacrylate de lauryle.

3. Le liant selon la revendication 1, dans lequel le second groupe de monomères comprend :
l'acrylamide, le n-méthyloacrylamide, le n-butoxyméthyacrylamide ; le méthyacrylamide, le n-méthylométhacrylamide, le n-butoxyméthylméthacrylamide ; l'acide acrylique, l'acide méthacrylique , l'acide itaconique, l'acide maléique, l'acide fumarique, l'acide citraconique, l'acide métaconique, l'acide glutaconique, l'acide tétrahydrophtalique, l'acide crotonique, l'acide isocrotonique et l'acide nadique.

4. Le liant selon la revendication 1, dans lequel le copolymère (c) est copolymérisé avec un plusieurs monomères supplémentaires choisis parmi le premier groupe de monomères et le second groupes de monomères.

5. Le liant selon la revendication 1, dans lequel le copolymère (c) est un copolymère comprenant l'acrylamide, l'acide acrylique et l'acide itaconique.

6. Le liant selon la revendication 1, dans lequel le liant comprend des particules de polymère composites formées d'au moins quatre phases, préparées en polymérisant successivement le polymère (a), le polymère (b) et le polymère (c), où chacune des étapes pour la polymérisation des polymères (a), (b) et (c) est réalisée en au moins deux fois en utilisant des monomères différents.

7. Le liant selon la revendication 1, dans lequel les particules de polymère composites ayant une forme structurée à deux phases comprennent entre 50 et 90 % en poids de polymère (a) et entre 10 et 50% en poids de polymère (b) ou de polymère (c), les particules de polymère composites ayant une forme structurée à trois phases comprennent entre 10 et 50 % en poids de polymère (c), et les particules de polymère composites ayant une forme structurée à au moins quatre phases comprennent entre 50 et 90 % en poids de la polymérisation répétée du polymère (a) et du polymère (b) et entre 10 et 50 % en poids de polymère (c).

8. Le liant selon la revendication 1, dans lequel la taille des particules finales se situe entre 100nm et 300nm

9. Le liant selon la revendication 1, dans lequel la température de transition vitreuse pour chaque polymère (a), (b) et (c) se situe entre -10°C et 30°C.

10. Le liant selon la revendication 1, dans lequel la teneur en gel est égale ou supérieure à 50%.

11. Un laitier pour une électrode de batterie secondaire au lithium comprenant le liant tel que défini dans la revendication 1 et des matériaux actifs.

12. Une électrode de batterie secondaire au lithium obtenue en revêtant un collecteur avec le laitier tel que défini dans la revendication 11.

13. Une batterie secondaire au lithium comprenant l'électrode telle que définie dans la revendication 12.

14. Le liant selon la revendication 1, dans lequel la particule de polymère composite comporte le polymère (a), le polymère (b) et le polymère (c), l'un après l'autre, en partant de l'intérieur du liant.

15. Le liant selon la revendication 1, dans lequel le polymère intérieur est entouré par un polymère extérieur et où les propriétés physiques des deux polymères sont différentes.
